# EUROPEAN PATENT SPECIFICATION

(11) **EP 3 882 602 B1**
(45) Date of publication and mention of the grant of the patent: **26.07.2023**
(21) Application number: 21162456.4
(22) Date of filing: 12.03.2021
(51) Int. Cl.: G01N 15/08, F24F 11/39, F24F 11/89, F24F 13/02

(54) **PROBE FOR SAFETY DUCT HOUSING FOR FILTER**
SONDE FÜR EIN SICHERHEITSKANALGEHÄUSE FÜR FILTER
SONDE POUR BOÎTIER DE CONDUIT DE SÉCURITÉ POUR FILTRE

(30) Priority: 18.03.2020 IT 202000005785
(43) Date of publication of application: 22.09.2021
(73) Proprietor: Sifa Technology S.r.l., 60041 Sassoferrato (AN) (IT)
(72) Inventor: FEDELI, FEDERICO, 60040 GENGA (AN) (IT)
(74) Representative: Baldi, Claudio

(56) References cited:
- EP-A1- 3 069 331
- DE-A1- 10 236 160
- US-A1- 2016 097 705
- US-A1- 2018 031 466

## Description

The present invention relates to a probe used for checking the efficiency of a filter disposed in a safety duct housing crossed by a gaseous flow.

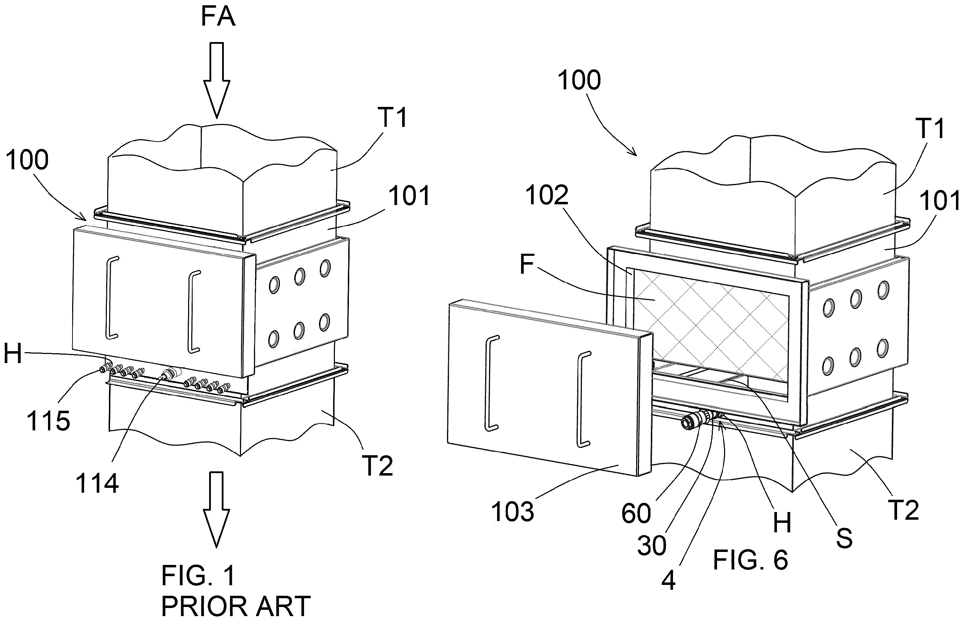

Fig. 1 is a diagrammatic view of a safety duct housing (100) according to the prior art that substantially consists in a box (101) generally made of sheet metal and shaped as a parallelepiped collar that contains a filter. The box (101) is tightly disposed between two pipes (T1, T2) crossed by a gaseous flow (FA) to be filtered.

The purpose of such a safety duct housing (100) is to guarantee a perfect seal of the filter/housing system because said safety duct housings are generally used in chemical, pharmaceutical or nuclear plants, where the substances to be filtered may often be a source of contamination. Therefore, it is extremely important to continuously and carefully monitor the filtration efficiency of the filter by means of special sampling probes capable of taking samples of the filtered substance in different points of the safety duct housing (100) downstream the filter.

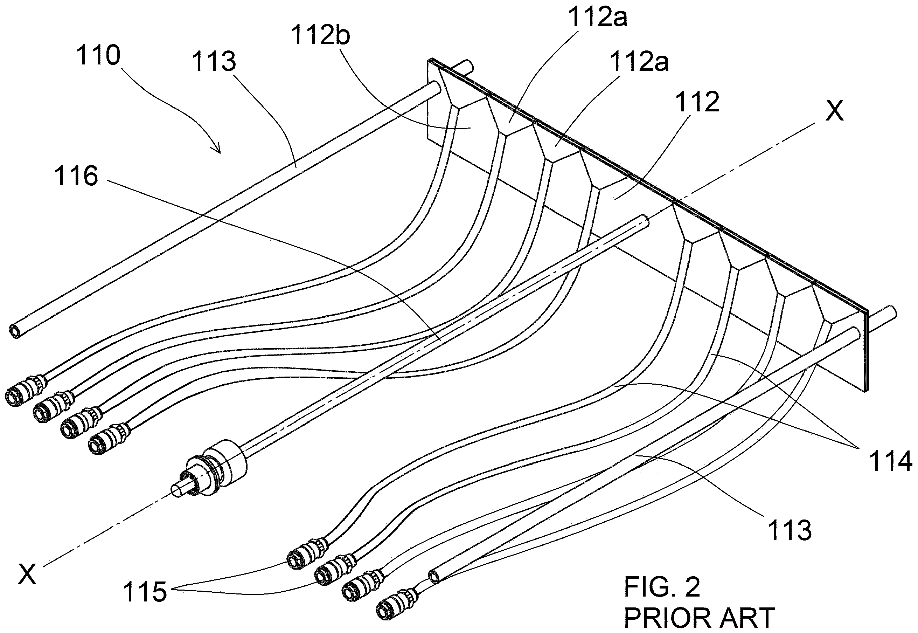

Fig. 2 is a diagrammatic view of the structure of a probe (110) according to the prior art that comprises a head (112). The head (112) comprises a plate (112b) and a plurality of inlet nozzles (112a) that are regularly spaced on the plate (112b). The plate (112b) is slidingly mounted on a pair of rails (113) in order to slide forward and backwards along an axis (X) orthogonal to the plate.

Each inlet nozzle (112a) is connected to a flexible tube (114) that ends with an outlet nozzle (115) suitable for being connected by means of a tube (not shown) to an analysis and control unit of the sample.

As shown in Fig. 1, the frame of the safety duct housing (100) is to be provided with a plurality of holes (H) for the insertion of the outlet nozzles (115) in tight mode. Evidently, said holes (H) are critical points for the tight seal of the safety duct housing (100).

Going back to Fig. 2, the probe (110) comprises a maneuvering bar (116) fixed to the head (112). The maneuvering bar (116) passes through the safety duct housing (100) and comes out of the safety duct housing (100), thus offering a grabbing point for the operator, who must repeatedly perform the following operations:
a) to connect the analysis and control unit to a selected outlet nozzle (115) that is opened,
b) for each selected outlet nozzle (115), to grab the end of the maneuvering rod (114) in order to move the head (112) in step by step mode, taking a sample at every stop from the inlet nozzle (112a) that corresponds to the selected outlet nozzle (115).

US2016/0097705 discloses a sample probe that comprises three heads disposed in parallel position. The three heads are moved by a rod. Each head has four inlets in communication with respective outlets. The twelve outlets of the three heads must be connected to respective ports (nozzles) that are tightly inserted in the frame of the housing by means of twelve flexible tubes. Therefore US2016/0097705 discloses a probe according to the prior art, which comprises a plurality of ports that are tightly inserted in holes of the frame of the housing and wherein the connection between the outlets of the heads and the ports of the frame of the housing is obtained by means of a plurality of flexible tubes.

Such a type of probe is impaired by several drawbacks due to the ports and the flexible tubes.

The large number of outlet ports in the frame of the housing implies the presence of critical points where the tightness of the housing can get lost, with the risk of leaks of contaminating substances.

The large number of flexible tubes that connect the outlets of the heads to the outlet ports in the frame of the housing implies load losses in the movement of the head due to the resistance of the flexible tubes against the gas contained in the housing. Moreover, the resistance of said flexible tubes causes the vibration of the probe and of the housing, with the risk of loosening the seals and generating leaks of contaminating substances.

Moreover, said flexible tubes are the parts of the probes with the highest exposure to the wear caused by the chemical agents that pass through the housing and therefore require a continuous monitoring and maintenance activity.

Furthermore, the parallel arrangement of three heads does not cover the entire length of the housing, each head covering only 1/3 of the length of the housing; in view of this, a complete sampling of the gas on the entire section of the housing is not possible, with over-reading problems and with a consequent increase in the number of possible reliability errors during the performance of the test.

EP3069331 discloses a rotary sampling valve comprising a first set of inlet ports, a second set of inlet ports, a first outlet port and a second outlet port. The inlet ports of the first set can be selectively connected to the first outlet port. The inlet ports of the second set can be selectively connected to the second outlet port. EP3069331 does not refer to the technical problem of the tight seal of a safety duct housing wherein a probe is disposed. The rotary sampling valve of EP3069331 is not suitable for being installed in a head of the probe. In fact, such a rotary sampling valve can be installed outside the safety housing to connect the outlet ports of the safety duct housing with the analysis and control unit. Such a rotary sampling valve cannot be actuated by the maneuvering rod of a probe.

The purpose of the present invention is to overcome the drawbacks of the prior art by disclosing a probe used for checking the efficiency of a filter disposed in a safety duct housing crossed by gaseous flows, which is reliable and capable of minimizing the risk of leaks of the safety duct housing.

Another purpose of the invention is to disclose such a probe that is versatile, easy to use and capable of accelerating and facilitating the monitoring operations.

Another purpose of the invention is to realize a probe that can be installed in a safety duct housing, without impairing the structural integrity of the housing and reducing the problems related with the tight seal of the housing.

Another purpose is to disclose such a probe that is easy to realize, install and maintain.

These purposes have been achieved according to the invention with the characteristics of the independent claim 1.

Advantageous embodiments of the invention appear from the dependent claims.

For the sake of clarity, the description of the probe according to the invention continues with reference to the appended drawings, which have a merely illustrative, not limiting value, wherein:
Fig. 1 is a perspective view of a safety duct housing according to the prior art;
Fig. 2 is a perspective view of a probe according to the prior art;
Fig. 3 is a perspective view of a probe according to the invention;
Fig. 4 is an exploded perspective view of the head of the probe according to the invention;
Fig. 5 is an enlarged view of a detail of the head of the probe according to the invention; and
Fig. 6 is a perspective view of a safety duct housing provided with the probe of the invention.

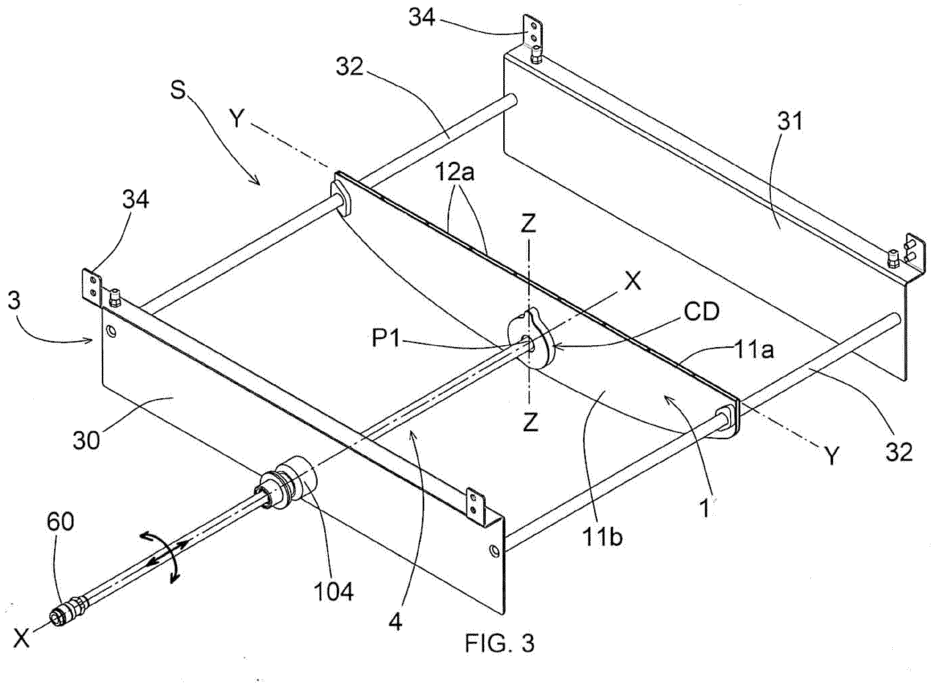

With reference to Fig. 3, the probe (S) of the invention comprises a frame (3) with rectangular shape. The frame (3) comprises a front side (30), a back side (31) and two rails (32) connected to the front side and the back side. A head (1) is slidingly supported by the rails (32).

The frame (3) is suitable for being mounted inside a safety duct housing (100) (Fig. 6). A filter (F) is housed inside the safety duct housing (100). The actual filtration capability of the filter (F) is monitored in correspondence of a grid of points downstream the filter, which coincide with the nodes of an imaginary net with quadrangular meshes. Each node of the net is identified with coordinates (x, y) of a Cartesian system. The frame (3) is provided with brackets (34) for fixing the frame (3) with screws inside the safety duct housing (100).

With reference to Fig. 6, the safety duct housing (100) consists in a box (101) shaped like a parallelepiped collar, which is suitable for being hermetically disposed between two pipes (T1, T2) crossed by the gaseous flow to be filtered.

The probe (S) comprises a rod (4) connected to the head (1), on a central portion of the head. The axis (X) of the rod (4) is parallel to the rails (32). The length of the rod (4) is higher than the length of the rails (32) in such a way to protrude from the safety duct housing (100), as shown in Fig. 6.

The rod (4) has an internally empty tubular shape and comprises an axial duct with an inlet hole (40a) and an outlet hole (40b).

The rod (4) has two functions:
- the first function is to provide a delivery duct used to transfer outside the safety duct housing (100) the sample of gaseous substance conveyed inside the head (1);
- the second function is to provide a maneuvering bar that can be pushed or pulled by the operator in order to make the head (1) slide forward or backwards along the rails (23) along a direction that coincides with the longitudinal axis (X) of the rod (4).

The head (1) comprises a body with a plurality of ducts (12). Each duct (12) comprises an inlet (12a) and an outlet (12b). The inlets (12a) are aligned along a perpendicular axis (Y) relative to the axis (X) of the rod (4).

The head (1) comprises a hollow plate (10) disposed in vertical position, orthogonally to the rails (32). The hollow plate (10) has a front side (11b) directed towards said rod (4).

Preferably, the hollow plate (10) is shaped as a segment of a circle; the secant of the circle coincides with a rectilinear upper edge (11a) that receives the gaseous flow that passes through the safety duct housing (100).

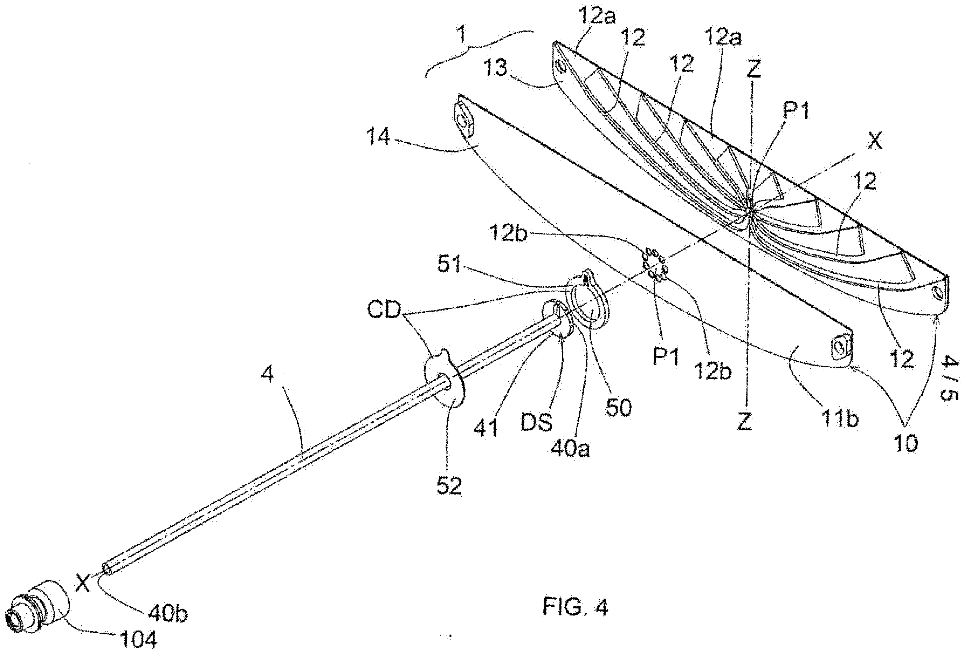

Preferably, the hollow plate (10) is obtained by coupling a back plate (13) and a front plate (14), as shown in Fig. 4.

The back plate (13) is provided with the ducts (12), which have a fan-like configuration relative to a vertical axis of symmetry (Z) passing through a central point (P1) of the hollow plate (11) crossed by the longitudinal axis (X) of the rod (4).

The inlets (12a) of the ducts (12) are regularly spaced along the upper edge (11a) of the head, whereas the outlets (12b) are disposed in the central area of the head (1) in proximal position around the rod (4).

More precisely, the outlets (12b) consist in circular holes obtained on the front side (11b) of the head and regularly disposed in loop configuration around said central point (P1).

The probe (S) also comprises:
- a distributor (CD) associated with the head (1) and in communication with the outlets (12a) of the head; and
- a selector (DS) connected to the rod (4) and housed inside the distributor (CD).

The function of the selector (DS) is to selectively put in communication the inlet hole (40a) of the rod with only one outlet (12b) of the head.

The distributor (CD) comprises a circular cavity (50) defined by a collar (51) fixed on the front side (11b) of the hollow plate (10) and hermetically closed by a circular lid (52). The cavity (50) of the distributor communicates with all the outlets (12b) of the ducts (12) of the head.

The selector (DS) comprises a disk (41) fixed to the rod (4) and revolvingly mounted inside the cavity (50) of the distributor.

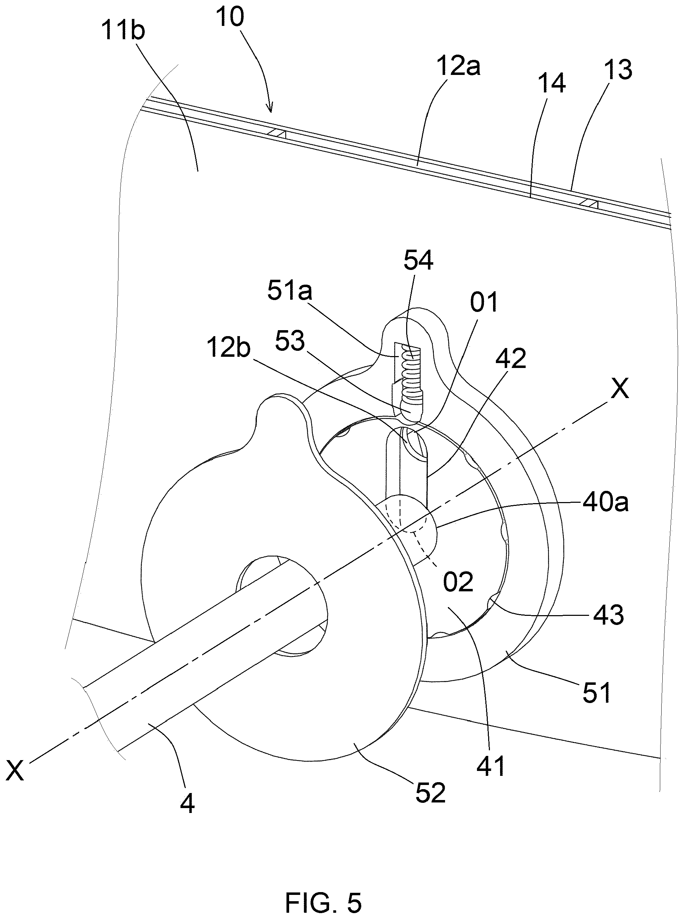

As shown in Fig. 5, the disk (41) of the selector has a radial slot (42) that extends from a first point (O1) proximal to the circumference of the disk (41) to a second point (O2) proximal to the center of the disk (41) and falling inside the inlet hole (40a) of the rod (4).

The disk (41) is fixed to the rod (4) around the inlet hole (40a) of the rod, in such a way that the slot (42) of the disk is in communication with the inlet hole (40a) of the rod.

A thrust exerted on the rod (4) determines the forward movement of the hollow plate (10) that directly compresses the disk (41) integral with the rod (4), whereas a traction exerted on the rod (4) determines the backward movement of the hollow plate (10) because the disk (41) compresses the lid (52) of the distributor fixed to the collar (51) that is integral with the hollow plate (10).

The disk (41) of the selector permits to selectively transfer the sample of gaseous substance that is conveyed inside the head (1) inside the inlet hole (40a) of the rod (4).

More precisely, the radial slot (42) of the disk of the selector is dimensioned in such a way that said first point (O1) is interfaced with only one outlet (12b) of the head. Therefore the gaseous substance that can be transferred in the inlet (40a) of the rod is the one conveyed in the inlet (12a) of the duct (12) of the head that corresponds to the outlet (12b) that is momentarily interfaced with the slot (42) of the disk of the distributor.

By simply rotating the rod (4) around its axis (X), the operator can transfer outside the safety duct housing (100) a sample of gaseous substance taken in different points that coincide with the spaced set of inlets (12a) disposed along the upper edge (11a) of the hollow plate (10).

In order to favor the rapid, precise, stable interfacing between each outlet (12b) of the head and the slot (42) of the disk of the selector, the disk (41) is provided with a peripheral edge with a serrated profile, which comprises a regularly spaced set of arched niches (43) in a number equal to the number of ducts (12) of the head.

The collar (51) of the distributor comprises a radial seat (51a) in communication with the cavity (50) of the distributor. A ball (53) is housed in the radial seat (51a) of the collar of the distributor and is subject to the thrust of a spring (54) contained inside the radial seat (51a);

The ball (53) partially protrudes inside the cavity (50) of the distributor in such a way to be inserted in one of the arched niches (43) obtained on the edge of the disk (41) of the selector. In view of the above, a free rotation of the disk (41) of the selector inside the cavity (50) of the distributor is hindered because of a fit-in coupling between the ball (52) and the niche (43).

Every time the ball (53) is coupled with an arched niche (43) of the disk (41), an outlet (12b) of the hollow plate (10) is exactly interfaced with the slot (42) of the disk (41).

When the rod (4) is grabbed and rotated by the operator, the ball (53) is ejected from the arched niche (43) where it is temporarily matched, loading the spring (54) that pushes the ball (53) in a new arched niche (43).

Fig. 6 is a view of an ordinary safety duct housing (100) wherein the probe (S) is installed. The safety duct housing (100) is hermetically disposed between two pipes (T1, T2 ). The safety duct housing (100) houses a filter (F) that can be inserted into or extracted from the safety duct housing (100) through an opening (102) provided with a hermetical lid (103).

The rod (4) protrudes from the safety duct housing (100) in such a way that the operator can rotate or slide the rod (4) relative to its axis (X) by simply grabbing the end of the rod (4) that protrudes from the safety duct housing (100).

A tap (60) is mounted on the outlet hole (40b) of the rod and is fitted to a connector of a connection pipe (not shown in the figures) in communication with an analysis and control unit (not shown in the figures) suitable for analyzing the samples of gaseous substance taken by the probe.

After fitting the connector of the connection tube of the analysis and control unit in the tap (60), the filtering of the filter (F) can be checked in all the points selected by the operator, without having to repeatedly connect and disconnect the different nozzles (such as the nozzles (115) of the safety duct housing of Fig. 1, in the case of a probe (110) according to the prior art shown in Fig. 2).

Because of the provision of the probe (S), only one hole (H) is to be drilled on the back wall of the safety duct housing (100) for hermetically fitting the tap (60) by means of a bushing (104) (Fig. 3) fixed to the front wall (30) of the frame (3). The provision of only one hole (H) minimizes the risk of leaks of the safety duct housing (100), and reduces the manufacturing, maintenance and repair costs in case of problems with the bushing (104) mounted in the hole (F) crossed by the rod (4).

Because of the fact that no flexible tubes are provided, the probe (S) of the invention has the following advantages compared to the probes of the prior art:
- lower load losses are generated inside the safety duct housing (100) during the movement of the head (1) because there are less parts that interfere with the air;
- the probe (S) has a completely rigid structure that is not subject to vibrations;
- the probe (S) has a lower number of wearable parts;
- the safety duct housing (100) has a lower number of points with risk of leaks.

## Claims

1. Probe (S) for safety duct housing (100) for filter (F) comprising:
- a pair of rails (32),
- a head (1) that is slidingly supported on said pair of rails (32); said head (1) having a plurality of inlets (12a) in communication with outlets (12b) by means of channels (12), and
- a rod (4) connected to said head (10) and suitable for protruding from said safety duct housing (100) in order to be moved by a user, in such a way to translate the head (1) inside the safety duct housing (100) along an axis (X) of the rod (4) parallel to the rails (20);
**characterized in that**
said rod (4) has a hollow rigid tubular structure, having an axial duct in communication with an inlet hole (40a) and an outlet hole (40b) of the rod; said outlet hole (40b) of the rod being suitable for being connected to an analysis and control unit outside said safety duct housing (100);
said probe (S) also comprises:
- a distributor (CD) mounted in said head (1) and having a cavity (50) in communication with said outlets (12b) of the head; and
- a selector (DS) fixed to the rod (4) and housed in said cavity (50) of the distributor in correspondence of said inlet hole (40a) of the rod; said selector (DS) being actuated by rotating the rod (4) in order to selectively put in communication said inlet hole (40a) of the rod with only one outlet (12b) of the head.

2. The probe (S) of claim 1, wherein said head (1) comprises a hollow plate (10) with a rectilinear upper edge (11a) wherein said inlets (12a) are obtained;
the outlets (12b) of the head consist in circular holes obtained on a front side (11b) of the hollow plate (10) and disposed in ring configuration in proximal position around the rod (4);
the ducts (12) that put the inlets (12a) in communication with the outlets (12b) have a fan-like configuration, converging towards said outlets (12b) of the head.

3. The probe (S) of claim 1 or 2, wherein said distributor (CD) comprises a collar (51) fixed to the front side (11b) of the head in such a way to define said cavity (50) of the distributor; and a lid (52) disposed around the rod (4) is fixed to the collar (51); wherein said cavity (50) of the distributor is in communication with all the outlets (12b) of the head.

4. The probe (S) according to any one of the preceding claims, wherein said selector (DS) comprises a disk (41) fixed to said rod (4) and revolvingly disposed inside said cavity (50) of the distributor; said disk (41) of the selector having a radial slot (42) in communication with the inlet hole (40a) of the rod and with only one outlet (12b) of the head.

5. The probe (S) according to any one of the preceding claims, wherein said head (1) is shaped like a segment of a circle.

6. The probe (S) according to any one of the preceding claims, wherein said head (1) comprises a back plate (13) and a front plate (14) that are coupled one with the other.

7. The probe (S) according to one of claims 4 to 6, wherein:
said disk (41) of the selector has a serrated perimeter profile that comprises arched niches (43) in a number equal to the number of ducts (12) of the head;
said collar (51) of the distributor has a radial seat (51a) that is in communication with the cavity (50) of the distributor and houses a sphere (53) pushed by a spring (54), said sphere (53) being suitable for being engaged in one of said arched niches (43) obtained on the peripheral edge of the disk (41) of the selector.

8. The probe (S) according to any one of the preceding claims, wherein said probe comprises a frame (3) with rectangular shape comprising a front wall (30) and a back wall (31) fixed to said rails (32); said frame (3) having brackets (34) suitable for being fixed inside the safety duct housing (100).

9. Safety duct housing (100) comprising:
- a box (101) shaped like a parallelepiped collar, suitable for being hermetically disposed between two pipes (T1 and T2) crossed by a gaseous flow;
- a filter (F) disposed inside said box (101) and
- a probe (S) according to any one of the preceding claims disposed inside said box (101) downstream the filter (F).

## Patentansprüche

1. Sonde (S) für Sicherheitskanalgehäuse (100) für Filter (F), umfassend:
- zwei Führungsschienen (32),
- einen Kopf (1), der verschiebbar auf dem Paar von Führungsschienen (32) gelagert ist; wobei der Kopf (1) eine Mehrzahl von Einlassmündungen (12a) aufweist, die mittels Kanälen (12) mit jeweiligen Auslassmündungen (12b) in Verbindung stehen, und
- einen Stab (4), der mit dem Kopf (1) verbunden und dazu bestimmt ist, aus dem Sicherheitskanalgehäuse (100) auszutreten, um von einem Benutzer bewegt zu werden, so dass der Kopf (1) in dem Sicherheitskanalgehäuse (100) entlang einer Achse (X) des Stabs (4) parallel zu den Führungsschienen (32) verschoben wird;
**dadurch gekennzeichnet, dass**
der Stab (4) eine rohrförmige Struktur aufweist, die starr und innen hohl ist, mit einem axialen Kanal, der mit einem Einlassloch (40a) und einem Auslassloch (40b) des Stabs in Verbindung steht; wobei das Auslassloch (40b) des Stabs dazu geeignet ist, mit einer Analyse- und Steuereinheit außerhalb des Sicherheitskanalgehäuses (100) verbunden zu werden;
wobei die Sonde (S) ferner umfasst:
- einen Verteiler (CD), der in dem Kopf (1) eingebaut ist und einen Hohlraum (50) aufweist, der mit den Auslassmündungen (12b) des Kopfes in Verbindung steht; und
- einen Wahlschalter (DS), der an dem Stab (4) befestigt ist und in dem Hohlraum (50) des Verteilers an dem Einlassloch (40a) des Stabs untergebracht ist; wobei der Wahlschalter (DS) durch Drehen des Stabs (4) betätigt wird, um das Einlassloch (40a) des Stabs wahlweise mit nur einer Auslassmündung (12b) des Kopfes in Verbindung zu setzen.

2. Sonde (S) nach Anspruch 1, wobei der Kopf (1) eine hohle Platte (10) mit einem geradlinigen oberen Rand (11a) umfasst, in dem die Einlassmündungen (12a) herausgearbeitet sind;
die Auslassmündungen (12b) des Kopfes aus kreisförmigen Löchern bestehen, die auf einer Vorderseite (11b) der hohlen Platte (10) herausgearbeitet sind und in proximaler Position ringförmig um den Stab (4) herum angeordnet sind;
die Leitungen (12), die die Einlassmündungen (12a) mit den Auslassmündungen (12b) in Verbindung setzen, fächerartig ausgerichtet sind und zu den Auslassmündungen (12b) des Kopfes hin zusammenlaufen.

3. Sonde (S) nach Anspruch 1 oder 2, wobei der Verteiler (CD) einen Bund (51) umfasst, der an der Vorderseite (11b) des Kopfes befestigt ist, so dass der Hohlraum (50) des Verteilers begrenzt wird; und ein Deckel (52), der um den Stab (4) herum angeordnet ist, an dem Bund (51) befestigt ist; wobei der Hohlraum (50) des Verteilers mit allen Auslassmündungen (12b) des Kopfes in Verbindung steht.

4. Sonde (S) nach einem der vorstehenden Ansprüche, wobei der Wahlschalter (DS) eine Scheibe (41) umfasst, die an dem Stab (4) befestigt ist und in dem Hohlraum (50) des Verteilers drehbar angeordnet ist; wobei die Scheibe (41) des Wahlschalters einen radialen Schlitz (42) aufweist, der mit dem Einlassloch (40a) des Stabs und mit nur einer Auslassmündung (12b) des Kopfes in Verbindung steht.

5. Sonde (S) nach einem der vorstehenden Ansprüche, wobei der Kopf (1) die Form eines Kreisabschnitts aufweist.

6. Sonde (S) nach einem der vorstehenden Ansprüche, wobei der Kopf (1) eine hintere Platte (13) und eine vordere Platte (14) umfasst, die miteinander gekoppelt sind.

7. Sonde (S) nach einem der Ansprüche 4 bis 6, wobei:
die Scheibe (41) des Wahlschalters einen gezahnten, peripheren Rand aufweist, der bogenförmige Nischen (43) in einer der Anzahl der Leitungen (12) des Kopfes entsprechenden Anzahl umfasst;
der Bund (51) des Verteilers einen radialen Sitz (51a) aufweist, der mit dem Hohlraum (50) des Verteilers in Verbindung steht und eine Kugel (53) beherbergt, die von einer Feder (54) gedrückt wird, wobei die Kugel (53) dazu geeignet ist, in eine der bogenförmigen Nischen (43) einzugreifen, die auf dem peripheren Rand der Scheibe (41) des Wahlschalters herausgearbeitet sind.

8. Sonde (S) nach einem der vorstehenden Ansprüche, wobei die Sonde einen Rahmen (3) mit rechteckiger Form umfasst, der eine Vorderwand (30) und eine Rückwand (31) umfasst, die an den Führungsschienen (32) befestigt sind; wobei der Rahmen (3) Bügel (34) aufweist, die dazu geeignet sind, in dem Sicherheitskanalgehäuse (100) befestigt zu werden.

9. Sicherheitskanalgehäuse (100), umfassend:
- einen Kasten (101) in Form eines quaderförmigen Bundes, der dazu geeignet ist, hermetisch zwischen zwei Rohren (T1 und T2) angeordnet zu werden, die von Gas durchströmt werden;
- einen Filter (F), der in dem Kasten (101) angeordnet ist, und
eine Sonde (S) nach einem der vorstehenden Ansprüche, die in dem Kasten (101), dem Filter (F) nachgelagert, angeordnet ist.

## Revendications

1. Sonde (S) pour enveloppe de sécurité de tuyère (100) pour filtre (F), comprenant :
- deux rails de guidage (32),
- une tête (1) soutenue coulissante sur les deux dits rails de guidage (32) ; ladite tête (1) ayant une pluralité d'embouchures d'entrée (12a) qui communiquent, moyennant des canaux (12), avec des respectives embouchures de sortie (12b), et
- une tige (4) connectée à ladite tête (1) et destinée à sortir de ladite enveloppe de sécurité de tuyère (100) pour être déplacée par un utilisateur, de manière à faire déplacer la tête (1) dans l'enveloppe de sécurité de tuyère (100) le long d'un axe (X) de la tige (4) parallèle aux rails de guidage (32) ;
**caractérisée en ce que**
ladite tige (4) a une structure tubulaire creuse à l'intérieur, ayant une conduite axiale qui communique avec un orifice d'entrée (40a) et un orifice de sortie (40b) de la tige ; ledit orifice de sortie (40b) de la tige étant apte à être connecté à un module électronique d'analyse à l'extérieur de ladite enveloppe de sécurité de tuyère (100) ;
ladite sonde (S) comprend également :
- un distributeur (CD) installé dans ladite tête (1) et ayant une cavité (50) qui communique avec lesdites embouchures de sortie (12b) de la tête ; et
- un sélecteur (DS) fixé sur la tige (4) et logé dans ladite cavité (50) du distributeur, en correspondance dudit orifice d'entrée (40a) de la tige ; ledit sélecteur (DS) étant activé moyennant rotation de la tige (4) pour mettre en communication sélectivement ledit orifice d'entrée (40a) de la tige avec une seule embouchure de sortie (12b) de la tête.

2. Sonde (S) selon la revendication 1, où ladite tête (1) comprend une plaque creuse (10) ayant un bord supérieur (11a) rectiligne sur lequel lesdites embouchures d'entrée (12a) sont réalisées ;
les embouchures de sortie (12b) de la tête sont constituées d'orifices circulaires réalisés sur une face antérieure (11b) de la plaque creuse (10) et disposées à anneau et autour de la tige (4) ;
les conduites (12) qui mettent en communication les embouchures d'entrée (12a) avec les embouchures de sortie (12b) sont orientées à éventail en convergeant vers lesdites embouchures de sortie (12b) de la tête.

3. Sonde (S) selon la revendication 1 ou 2, où ledit distributeur (CD) comprend un collier (51) fixé sur la face antérieure (11b) de la tête, de manière à délimiter ladite cavité (50) du distributeur, et un couvercle (52), disposé autour de la tige (4), est fixé au collier (51); où ladite cavité (50) du distributeur communique avec toutes les embouchures de sortie (12b) de la tête.

4. Sonde (S) selon l'une quelconque des revendications précédentes, où ledit sélecteur (DS) comprend un disque (41) fixé sur ladite tige (4) et disposé pivotant dans ladite cavité (50) du distributeur ; ledit disque (41) du sélecteur ayant une fente radiale (42) qui communique avec l'orifice d'entrée (40a) de la tige et avec une seule embouchure de sortie (12b) de la tête.

5. Sonde (S) selon l'une quelconque des revendications précédentes, où ladite tête (1) a la forme d'une portion de cercle.

6. Sonde (S) selon l'une quelconque des revendications précédentes, où ladite tête (1) comprend une plaque postérieure (13) et une plaque antérieure (14) couplées entre elles.

7. Sonde (S) selon l'une des revendications de 4 à 6, où :
ledit disque (41) du sélecteur a un bord périphérique dentelé comprenant des niches en forme d'arcs (43) dont le nombre est égal au nombre de conduites (12) de la tête ;
ledit collier (51) du distributeur a un emplacement radial (51a) qui communique avec la cavité (50) du distributeur et loge une sphère (53) poussée par un ressort (54), ladite sphère (53) étant apte à se loger dans l'une desdites niches en forme d'arcs (43) réalisées sur le bord périphérique du disque (41) du sélecteur.

8. Sonde (S) selon l'une quelconque des revendications précédentes, où ladite sonde comprend un châssis (3) de forme rectangulaire comprenant une paroi antérieure (30) et une paroi postérieure (31) fixées aux dits rails de guidage (32) ; ledit châssis (3) ayant des brides (34) aptes à être fixées dans l'enveloppe de sécurité de tuyère (100).

9. Enveloppe de sécurité de tuyère (100) comprenant :
- un boîtier (101) ayant la forme d'un collier parallélépipède, apte à être disposé hermétiquement entre deux tuyaux (T1, T2) traversés par un flux aériforme ;
- un filtre (F) disposé dans ledit boîtier (101) et
- une sonde (S) selon l'une quelconque des revendications précédentes disposée dans ledit boîtier (101) en aval du filtre (F).
